# EUROPEAN PATENT SPECIFICATION

(11) **EP 3 885 729 B1**
(45) Date of publication and mention of the grant of the patent: **22.04.2026**
(21) Application number: 21157595.6
(22) Date of filing: 17.02.2021
(51) Int. Cl.: G01L 5/24, G01L 3/10, F03D 17/00, H02P 3/06, G01L 5/00, F03D 7/02

(54) **TORQUE ESTIMATION DEVICE**
VORRICHTUNG ZUR DREHMOMENTSCHÄTZUNG
DISPOSITIF D'ESTIMATION DE COUPLE

(30) Priority: 24.03.2020 JP 2020052762
(43) Date of publication of application: 29.09.2021
(60) Divisional application: 22178849.0
(73) Proprietor: Nabtesco Corporation, Tokyo 102-0093 (JP)
(72) Inventor: KOMORI, Hirofumi, Tokyo, 102-0093 (JP)
(74) Representative: Grünecker Patent- und Rechtsanwälte PartG mbB

(56) References cited:
- WO-A1-2019/091777
- CN-A- 110 082 100
- US-A1- 2009 301 224
- US-A1- 2012 027 589
- US-A1- 2018 231 425
- US-A1- 2019 187 011

## Description

### TECHNICAL FIELD

The present invention relates to a torque estimation device.

### BACKGROUND

A nacelle provided in a wind turbine is driven by one or more yaw actuators. The nacelle is thus rotated in the yaw direction (YAW) relative to a tower of the wind turbine. Such wind turbine with nacelle may be found in US 2018/231425 A1, CN 110 082 100 A, US 2019/187011 A1, US 2009/301224 A1, WO 2019/091777 A1 and US 2012/027589.

It is demanded to avoid overload of the yaw actuators (see, for example, Japanese Patent Application Publication No. 2015-140777).

To avoid overload of the yaw actuators, it is necessary that a torque estimation device estimates the torque of the shafts of the yaw actuators. However, in some cases, the torque of the shafts of the yaw actuators cannot be estimated.

To address the above problem, the object of the claimed invention is to provide a torque estimation device according to claim 1.

The above torque estimation device provides a high accuracy in estimating a torque based on the correspondence information for estimating the torque, even when the drive unit is stopped.

### ADVANTAGEOUS EFFECTS

One or more aspects of the present invention described above make it possible to estimate the torque of the shafts of the yaw actuators.

### BRIEF DESCRIPTION OF THE DRAWINGS

Fig. 1 is a perspective view showing an example of configuration of a wind turbine.
Fig. 2 shows an example of configuration of a torque estimation system during operation of the wind turbine.
Fig. 3 shows a first example of measurement results of an electric current value and an amount of strain taken during operation of the wind turbine.
Fig. 4 shows an example of characteristic information.
Fig. 5 shows an example of a conversion table before update during operation of the wind turbine.
Fig. 6 shows a second example of measurement results of an electric current value and an amount of strain taken during operation of the wind turbine.
Fig. 7 shows an example of the conversion table after update during operation of the wind turbine.
Fig. 8 is a flowchart showing an example of operation of the torque estimation system performed during operation of the wind turbine.
Fig. 9 shows an example of configuration of the torque estimation system before operation of the wind turbine.
Fig. 10 shows an example of measurement results of torque and an amount of strain taken before operation of the wind turbine.
Fig. 11 shows an example of a conversion table before update during operation of the wind turbine.
Fig. 12 shows an example of the conversion table after update during operation of the wind turbine.
Fig. 13 is a flowchart showing an example of operation of the torque estimation system performed before operation of the wind turbine and operation of the torque estimation system performed during operation of the wind turbine.

### DESCRIPTION OF THE EMBODIMENTS

Embodiments of the present invention will now be described with reference to the appended drawings.

### First Embodiment

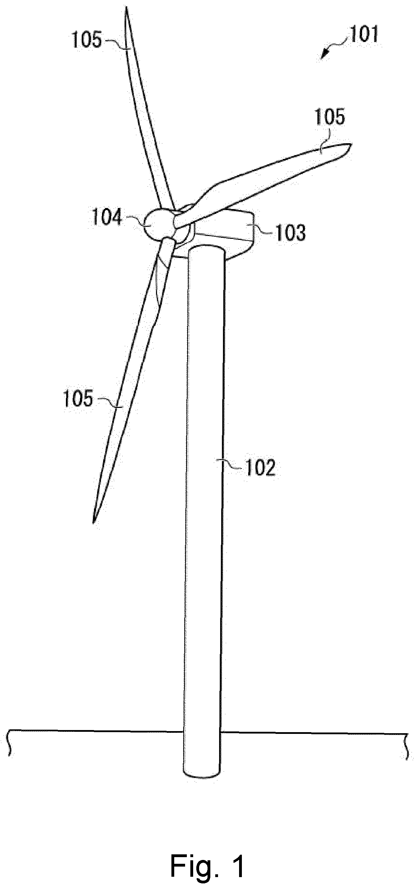

Fig. 1 is a perspective view showing an example of configuration of a wind turbine 101. The wind turbine 101 includes a tower 102, a nacelle 103, a rotor (main shaft portion) 104, and a plurality of blades 105. The tower is situated vertically upward from the land or the sea.

The nacelle 103 is situated on a top portion of the tower 102 so as to be rotatable. The nacelle 103 is driven by yaw actuators installed in the nacelle 103. The nacelle 103, driven by the yaw actuators, rotates about the longitudinal direction of the tower 102. In other words, the nacelle 103 rotates in the yaw direction (YAW) relative to the tower 102.

The rotor 104 rotates in the roll direction (ROLL) on the nacelle 103. The plurality (e.g., three) of blades 105 are provided on the rotor 104 at an equal angle relative to each other, so as to extend radially from the rotation axis of the roll direction.

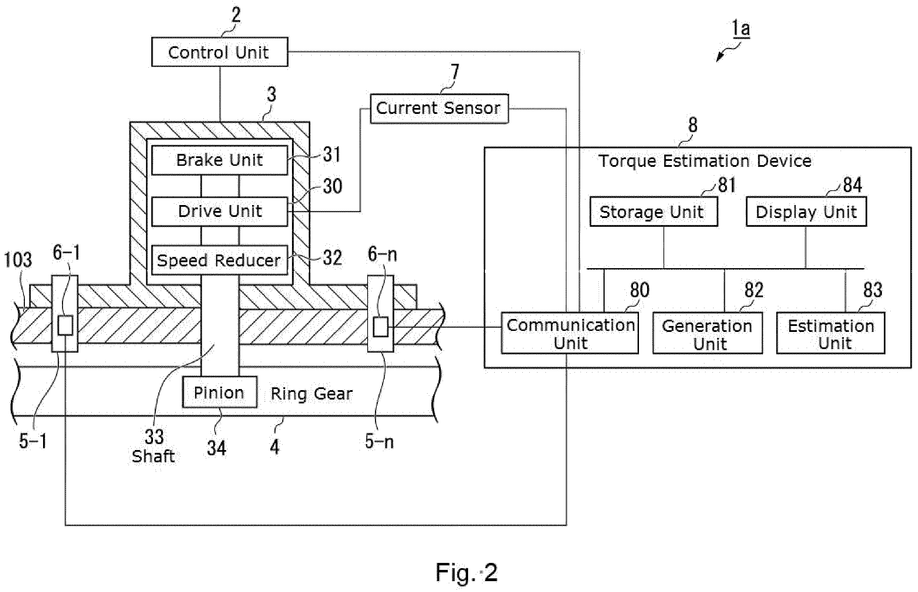

Fig. 2 shows an example of configuration of a torque estimation system 1a during operation of the wind turbine 101. The torque estimation system 1a includes a control unit 2, one or more yaw actuators 3, a ring gear 4, N (N is an integer not less than two) bolts 5, N strain sensors 6, a current sensor 7, and a torque estimation device 8. The torque estimation system 1a may include an actuator other than the yaw actuators. The torque estimation system 1a may estimate the torque of the actuator other than the yaw actuators. An example of the actuator other than the yaw actuators is a pitch actuator.

The yaw actuators 3 are fixed to the nacelle 103 of the wind turbine with the N bolts 5. Each of the yaw actuator 3 includes a drive unit 30, a brake unit 31, a speed reducer 32, a shaft 33 (drive shaft), and a pinion 34. The speed reducer 32 includes gears serving as a speed reducing mechanism. The pinion 34 is positioned at the end of the shaft 33 so as to mesh with the ring gear 4. The ring gear 4 is positioned on the top portion of the tower 102. The N bolts 5 are arranged circumferentially on the yaw actuator 3. A strain sensor 6-n (n is an integer from 1 to N) (strain amount obtaining unit) is positioned in a bolt 5-n.

The torque estimation device 8 includes a communication unit 80, a storage unit 81, a generation unit 82, an estimation unit 83, and a display unit 84. A part or all of the components of the torque estimation device 8 are positioned in, for example, an administration center (not shown). A part or all of the components of the torque estimation device 8 may be positioned in the wind turbine 101. The components of the torque estimation device 8 can communicate with each other via a bus. A part or all of the communication unit 80, the generation unit 82, and the estimation unit 83 are implemented by a processor such as a CPU (central processing unit) executing a program stored on the storage unit 81. The storage unit 81 is preferably formed of a non-volatile storage medium (non-transitory storage medium) such as a flash memory or a HDD. The storage unit 81 may include a volatile storage medium such as a RAM (random access memory). A part or all of the communication unit 80, the generation unit 82, and the estimation unit 83 may be implemented by using a microcomputer such as an LSI (large scale integration) or an ASIC (application specific integrated circuit).

The torque estimation system 1a estimates the torque of the shaft 33 of the yaw actuator 3. The torque estimation system 1a may operate as a state monitoring system for avoiding overload of the yaw actuator 3 based on the estimated torque.

The control unit 2 controls operation of the yaw actuator 3. The control unit 2 obtains the torque value of the shaft 33 of each yaw actuator 3 from the communication unit 80. The control unit 2 may weaken the electromagnetic brake of the brake unit 31 in the yaw actuator 3 when the shaft 33 of the yaw actuator 3 has a torque value equal to or larger than a predetermined value. The control unit 2 can thus reduce the load on the yaw actuator 3 when its shaft 33 has a torque value equal to or larger than a predetermined value. The control unit 2 can uniform the load on each yaw actuator 3 by adjusting the driving timing of the drive unit 30 and intermittently releasing the electromagnetic brake in the brake unit 31.

The yaw actuator 3 causes the nacelle 103 to rotate or stop in the yaw direction relative to the tower 102. The ring gear 4 is either a member having multiple internal teeth on its inner periphery or a member having multiple external teeth on its outer periphery. The bolts 5-1 to 5-N are members for fixing the yaw actuator 3 to the nacelle 103. The bolts 5 undergo strain in accordance with the moment caused by external loads such as wind. Each of the strain sensors 6 is a device for measuring the amount of strain in the corresponding bolt 5 in the longitudinal direction thereof. The current sensor 7 (current value obtaining unit) is a device for measuring the current value of the electric current supplied to the drive unit 30.

The torque estimation device 8 (calibration device) estimates the torque of the shaft 33 of the yaw actuator 3. The torque estimation device 8 is formed of, for example, a workstation, a personal computer, a tablet terminal, a smartphone terminal, or a programmable logic controller (PLC). The function part of the torque estimation device 8 may be distributed by cloud computing.

A description is now given of the yaw actuator 3. The drive unit 30 is a motor. The drive unit 30 rotates the shaft 33 about the longitudinal direction of the shaft 33 in accordance with the electric current supplied to the drive unit 30. The brake unit 31 reduces the rotational speed of the shaft 33 by an electromagnetic brake. The brake unit 31 may maintain the stopped state of the rotation of the shaft 33 by the electromagnetic brake. The speed reducer 32 sets the rotational speed of the shaft 33 by the gears included in the speed reducer 32.

The shaft 33 is driven by the drive unit 30 to rotate at a rotational speed reduced by the speed reducer 32. The shaft 33 is driven by the drive unit 30 to rotate with a predetermined torque (shaft torque). The pinion 34 rotates in mesh with the internal teeth of the ring gear 4 in accordance with the amount of rotation of the shaft 33. The nacelle 103 is thus rotated in the yaw direction relative to the tower 102.

A description is now given of the torque estimation device 8. The communication unit 80 communicates with respective function parts of the control unit 2, the strain sensors 6, and the current sensor 7 through wired or wireless communication. The communication unit 80 obtains the current value of the drive unit 30 from the current sensor 7. The communication unit 80 obtains the amount of strain in bolts 5 from the strain sensors 6. The communication unit 80 may obtain an instruction signal to the torque estimation device 8 from an external device (not shown). The communication unit 80 may obtain from an external device (not shown) an instruction signal indicating whether or not to end an estimation process, for example.

The storage unit 81 stores data tables such as a conversion table and characteristic information. The conversion table (correspondence information) represents correspondence between the current value of the drive unit 30, the amount of strain in the bolts 5, and the torque of the shaft 33. The characteristic information is, for example, specification information or prior measurement results of the drive unit 30. The storage unit 81 may store a program or a parameter.

The generation unit 82 generates the conversion table based on the current value of the drive unit 30, the amount of strain in the bolts 5, and the characteristic information. The estimation unit 83 can access the storage unit 81. The estimation unit 83 estimates the torque of the shaft 33 based on the current value or the amount of strain measured during operation of the wind turbine 101 and the conversion table. When the shaft 33 is stopped (not under drive), no drive current is supplied to the drive unit 30, and thus the current sensor 7 cannot measure an effective current value of the drive unit 30. Therefore, when the shaft 33 is stopped, the estimation unit 83 estimates the torque of the shaft 33 based on the measured amount of strain and the conversion table.

Use of the conversion table may be replaced with another way to represent the correspondence between the current value of the drive unit 30, the amount of strain in the bolts 5, and the characteristic information. For example, the generation unit 82 may generate a function (correspondence information) based on the current value of the drive unit 30, the amount of strain in the bolts 5, and the characteristic information. The estimation unit 83 may estimate the torque of the shaft 33 based on the current value or the amount of strain measured during operation of the wind turbine 101 and the function (correspondence information). The storage unit 81 may store data of such a function.

When the shaft 33 is being driven (the shaft 33 is under drive), a drive current is supplied to the drive unit 30, and thus the current sensor 7 can measure an effective current value of the drive unit 30. Therefore, when the shaft 33 is being driven, the estimation unit 83 estimates the torque of the shaft 33 based on the measured current value and the conversion table.

In addition, when the shaft 33 is being driven, each of the strain sensors 6 can measure the amount of strain in the corresponding bolt 5. Therefore, when the shaft 33 is being driven, the estimation unit 83 may estimate the torque of the shaft 33 based on the amount of strain measured while the shaft 33 is stopped or being driven and the conversion table.

The display unit 84 is, for example, a display device such as a liquid crystal display or an organic electroluminescence display. The display unit 84 may include an operation device such as a touch panel. The display unit 84 displays an image representing the result of the estimation performed by the estimation unit 83.

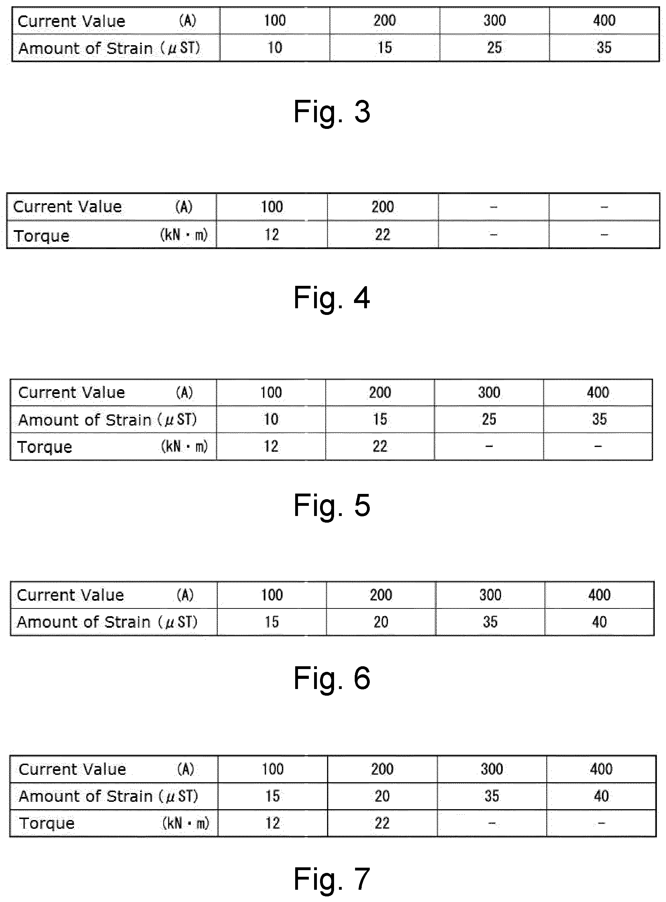

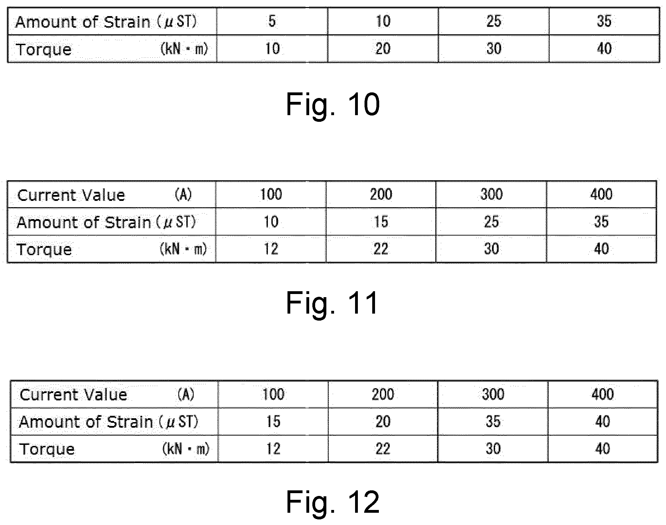

The data tables shown in Figs. 3 to 7 and the data tables shown in Figs. 10 to 12 contain values as examples.

Fig. 3 shows a first example of measurement results of the current value and the amount of strain taken during operation of the wind turbine 101. Fig. 3 shows the correspondence between the current value measured by the current sensor 7 and the amount of strain measured by each of the strain sensors 6. The storage unit 81 stores the measurement results of the current value and the amount of strain.

Fig. 4 shows an example of the characteristic information. The characteristic information is specification information or prior measurement results of the drive unit 30. The characteristic information represents the correspondence between the current value and the torque. The characteristic information is prepared in advance by a manufacturer of the drive unit 30. For example, the manufacturer of the drive unit 30 may prepare the characteristic information of the drive unit 30 when determining the specification of the drive unit 30. For example, the manufacturer of the drive unit 30 may prepare the characteristic information of the drive unit 30 by measuring the current value and the torque (shaft torque) of the drive unit 30 in the test process when the drive unit 30 is manufactured. The storage unit 81 stores the characteristic information.

Fig. 5 shows an example of the conversion table before update during operation of the wind turbine 101. The generation unit 82 generates the conversion table shown in Fig. 5 based on the current value and the amount of strain shown in Fig. 3 and the characteristic information shown in Fig. 4. Specifically, the generation unit 82 generates the conversion table shown in Fig. 5 using the current value in Fig. 3 and the current value in Fig. 4 as a common item.

For example, the generation unit 82 establishes in the conversion table the correspondence between the current value "100 A," the amount of strain "10 µST," and the torque "12 kN·m" using the current value "100 A" in Fig. 3 and the current value "100 A" in Fig. 4 as a common item.

For example, the generation unit 82 establishes in the conversion table the correspondence between the current value "200 A," the amount of strain "15 µST," and the torque "22 kN·m" using the current value "200 A" in Fig. 3 and the current value "200 A" in Fig. 4 as a common item.

Fig. 6 shows a second example of measurement results of the current value and the amount of strain taken during operation of the wind turbine 101. The updated amounts of strain shown in Fig. 6 are shifted upward from the amounts of strain shown in Fig. 3. In other words, the amounts of strain have drifted. The reason that the updated amounts of strain are larger is, for example, that the output of each of the strain sensors 6 changes with temperature and also changes over time.

Fig. 7 shows an example of the conversion table after update during operation of the wind turbine 101. The generation unit 82 generates the conversion table after update shown in Fig. 7 based on the updated current value and the updated amount of strain shown in Fig. 6 and the characteristic information shown in Fig. 4. For example, Fig. 5 shows the correspondence between the current value "100 A" and the amount of strain "10 µST," whereas Fig. 7 shows the correspondence between the current value "100 A" and the amount of strain "15 µST." For example, Fig. 5 shows the correspondence between the current value "200 A" and the amount of strain "15 µST," whereas Fig. 7 shows the correspondence between the current value "200 A" and the amount of strain "20 µST."

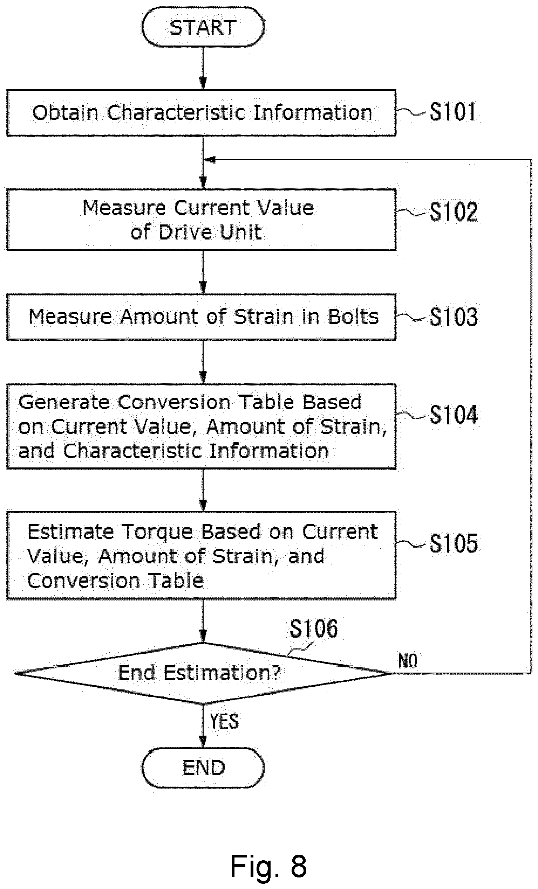

A description is now given of an example of operation of the torque estimation system 1a. Fig. 8 is a flowchart showing an example of operation of the torque estimation system 1a performed during operation of the wind turbine 101. The storage unit 81 obtains the characteristic information (such as shown in Fig. 4) from the communication unit 80. The storage unit 81 stores the characteristic information (step S101). The current sensor 7 measures the current value (such as shown in the upper row in Fig. 3) of the drive unit 30 (step S102). Each of the strain sensors 6 measures the amount of strain (such as shown in the lower row in Fig. 3) in the corresponding bolt 5 (step S103). The generation unit 82 generates the conversion table (such as shown in Fig. 5) based on the current value, the amount of strain, and the characteristic information (step S104).

The estimation unit 83 estimates the torque of the shaft 33 based on the current value or the amount of strain measured during operation and the conversion table. For example, when the drive unit 30 is stopped, the estimation unit 83 estimates the torque of the shaft 33 based on the amount of strain in the bolts 5 and the conversion table (step S105).

The estimation unit 83 determines whether or not to end the estimation process of the torque based on an instruction signal, for example (step S106). When the estimation unit 83 determines to continue the estimation process (continue the compensation of the torque) (NO in step S106), the estimation unit 83 returns to step S102. When the estimation unit 83 determines to end the estimation process (YES in step S106), the components of the torque estimation system 1a end the process shown in Fig. 8.

As described above, the current sensor 7 (current value obtaining unit) obtains the current value when a current is applied to the drive unit 30 of an actuator (for example, the yaw actuator 3 or the pitch actuator) included in the wind turbine 101. The strain sensors 6 (strain amount obtaining unit) obtain the amount of strain in the bolts that fix the actuator including the drive unit 30 to a fixation portion in the wind turbine 101. The storage unit 81 stores correspondence information representing the correspondence between the torque occurring in the shaft 33 (drive shaft) of the drive unit 30, the current value of the drive unit 30, and the amount of strain in the bolts when a current is applied to the drive unit 30. The estimation unit 83 estimates the torque of the shaft 33 (output shaft, drive shaft) based on the current value obtained by the current sensor 7 (current value obtaining unit) or the amount of strain obtained by each of the strain sensors 6 (strain amount obtaining unit). The generation unit 82 generates or updates the correspondence information (such as the conversion table shown in Fig. 5 or a function) representing the correspondence between the current value, the amount of strain, and the torque based on the current value and the amount of strain (such as shown in Fig. 3) and the characteristic information (such as shown in Fig. 4).

The correspondence between the current value and the torque is less subject to the change of the drive unit 30 with temperature or over time. Therefore, the generation unit 82 generates the correspondence information (conversion table, function) based on the characteristic information representing the correspondence between the current value and the torque, and based on the measured current value and amount of strain. This makes it possible to estimate the torque of the shaft 33 of the yaw actuator 3 within the range of the current value indicated by the characteristic information.

The torque estimation device 8 can be installed in an existing yaw actuator 3. The torque estimation device 8 can predict a failure of the yaw actuator 3 based on the estimated torques in time series. The torque estimation device 8 can reduce the possibility that the wind turbine 101 loses its time for power generation.

### Second Embodiment

The second embodiment differs from the first embodiment in that the torque of the shaft 33 and the amount of strain in the bolts 5 are measured with a simulated load applied to the shaft 33 before operation of the wind turbine 101 (when the yaw actuator 3 is installed). The following description of the second embodiment will be focused on the difference from the first embodiment.

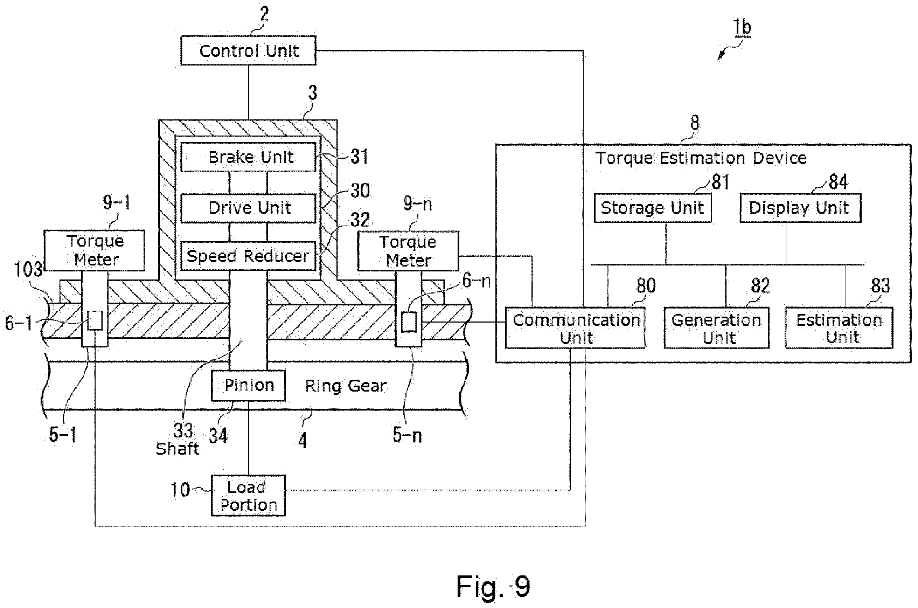

Fig. 9 shows an example of configuration of a torque estimation system 1b before operation of the wind turbine 101. The torque estimation system 1b includes a control unit 2, one or more yaw actuators 3, a ring gear 4, N bolts 5, N strain sensors 6, a torque estimation device 8, one or more torque meters 9, and a load portion 10.

The load portion 10 (load generation device) applies to the shaft 33 a torque of a value according to an instruction from the communication unit 80 before operation of the wind turbine 101. In this state, the torque meters 9 installed on the bolts 5 measure the torque applied to the shaft 33. In accordance with the torque applied to the shaft 33, a moment occurs in the yaw actuator 3, and thus a strain occurs in the bolts 5. Each of the strain sensors 6 measures the amount of strain in the corresponding bolt 5 before operation of the wind turbine 101.

Fig. 10 shows an example of measurement results of the torque and the amount of strain taken before operation of the wind turbine 101. Fig. 10 shows the correspondence between the amount of strain in the bolts 5 measured by the strain sensors 6 and the torque of the shaft 33 measured by the torque meters 9 installed on the bolts 5, for example. The storage unit 81 stores the measurement results of the torque and the amount of strain as pre-operation information.

The load portion 10 and the torque meters 9 are removed by an operator before the wind turbine 101 is put into operation. Prior to the operation of the wind turbine 101, the torque estimation system 1b is changed into the same configuration as the torque estimation system 1a of the first embodiment. Accordingly, during the operation of the wind turbine 101, the torque estimation system 1b has the same configuration as the torque estimation system 1a.

Fig. 11 shows an example of the conversion table before update during operation of the wind turbine 101. The generation unit 82 generates a part of the conversion table shown in Fig. 11 based on the current value and the amount of strain shown in Fig. 3 and the characteristic information shown in Fig. 4. Specifically, the generation unit 82 generates a part of the conversion table shown in Fig. 11 using the current value in Fig. 3 and the current value in Fig. 4 as a common item.

For example, the generation unit 82 establishes in the conversion table the correspondence between the current value "100 A," the amount of strain "10 µST," and the torque "12 kN·m" using the current value "100 A" in Fig. 3 and the current value "100 A" in Fig. 4 as a common item. For example, the generation unit 82 establishes in the conversion table the correspondence between the current value "200 A," the amount of strain "15 µST," and the torque "22 kN·m" using the current value "200 A" in Fig. 3 and the current value "200 A" in Fig. 4 as a common item.

Further, the generation unit 82 completes the conversion table shown in Fig. 11 based on the current value and the amount of strain shown in Fig. 3 and the pre-operation information shown in Fig. 10. Specifically, the generation unit 82 completes the conversion table shown in Fig. 11 using the amount of strain in Fig. 3 and the amount of strain in Fig. 10 as a common item.

For example, the generation unit 82 establishes in the conversion table the correspondence between the current value "300 A," the amount of strain "25 µST," and the torque "30 kN·m" using the amount of strain "25 µST" in Fig. 3 and the amount of strain "25 µST" in Fig. 10 as a common item. For example, the generation unit 82 establishes in the conversion table the correspondence between the current value "400 A," the amount of strain "35 µST," and the torque "40 kN·m" using the amount of strain "35 µST" in Fig. 3 and the amount of strain "35 µST" in Fig. 10 as a common item.

The following description is based on an example case in which the amounts of strain have drifted from those in Fig. 3, as shown in Fig. 6. The reason that the amounts of strain have drifted is, for example, that each of the outputs of the strain sensors 6 changes with temperature and also changes over time.

Fig. 12 shows an example of the conversion table after update during operation of the wind turbine 101. The generation unit 82 generates the conversion table after update shown in Fig. 12 based on the updated current value and the updated amount of strain shown in Fig. 6, the characteristic information shown in Fig. 4, and the pre-operation information shown in Fig. 10.

For example, Fig. 11 shows the correspondence between the current value "100 A" and the amount of strain "10 µST," whereas Fig. 12 shows the correspondence between the current value "100 A" and the amount of strain "15 µST." Fig. 11 shows the correspondence between the current value "200 A" and the amount of strain "15 µST," whereas Fig. 12 shows the correspondence between the current value "200 A" and the amount of strain "20 µST."

Likewise, for example, Fig. 11 shows the correspondence between the current value "300 A" and the amount of strain "25 µST," whereas Fig. 12 shows the correspondence between the current value "300 A" and the amount of strain "35 µST." Fig. 11 shows the correspondence between the current value "400 A" and the amount of strain "35 µST," whereas Fig. 12 shows the correspondence between the current value "400 A" and the amount of strain "40 µST."

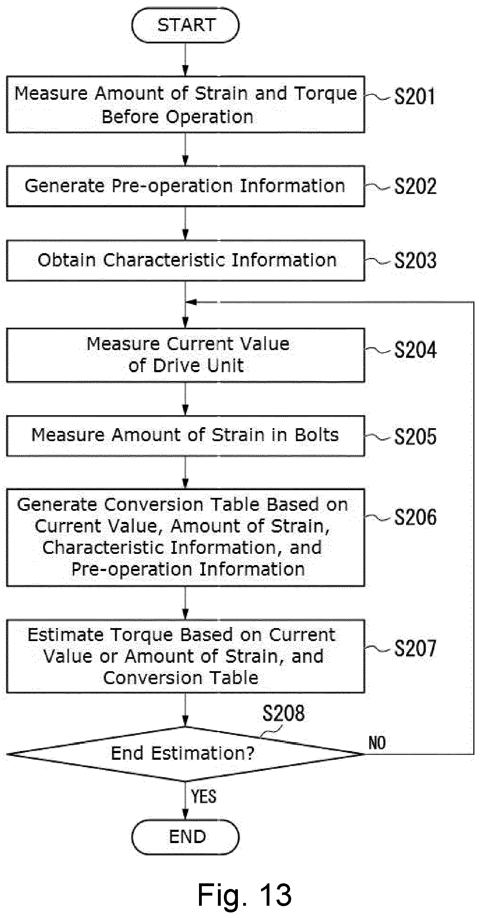

A description is now given of an example of operation of the torque estimation system 1b. Fig. 13 is a flowchart showing an example of operation (calibration) of the torque estimation system 1b performed before operation of the wind turbine 101 (when the yaw actuator 3 is installed) and operation of the torque estimation system 1b performed during operation of the wind turbine 101.

The load portion 10 applies to the shaft 33 a torque of a value according to an instruction from the communication unit 80 before operation of the wind turbine 101. Specifically, the load portion 10 applies to the shaft 33 a load simulating a load caused by wind force. In this state, the torque meters 9 installed on the bolts 5 measure the torque applied to the shaft 33. Each of the strain sensors 6 measures the amount of strain in the corresponding bolt 5 before operation of the wind turbine 101 (step S201).

The generation unit 82 generates the pre-operation information (such as shown in Fig. 10) representing the correspondence between the torque applied to the shaft 33 and the amount of strain in the bolts 5 (step S202).

During the operation of the wind turbine 101, the torque estimation system 1b has the same configuration as the torque estimation system 1a of the first embodiment.

The storage unit 81 obtains the characteristic information (such as shown in Fig. 4) from the communication unit 80. The storage unit 81 stores the characteristic information (step S203). The current sensor 7 measures the current value of the drive unit 30 (step S204). Each of the strain sensors 6 measures the amount of strain (such as shown in the lower row in Fig. 3) in the corresponding bolt 5 (step S205). The generation unit 82 generates the conversion table based on the current value, the amount of strain, the characteristic information, and the pre-operation information (step S206).

The estimation unit 83 estimates the torque of the shaft 33 based on the current value or the amount of strain measured during operation and the conversion table. For example, when the drive unit 30 is stopped (no current is applied to the drive unit 30), the estimation unit 83 estimates the torque of the shaft 33 based on the amount of strain in the bolts 5 and the conversion table (step S207).

The estimation unit 83 determines whether or not to end the estimation process of the torque based on an instruction signal, for example (step S208). When the estimation unit 83 determines to continue the estimation process (continue the compensation of the torque) (NO in step S208), the estimation unit 83 returns to step S204. When the estimation unit 83 determines to end the estimation process (YES in step S208), the components of the torque estimation system 1a end the process shown in Fig. 13.

As described above, the bolt 5-n has the torque meter 9-n installed thereon. The torque meters 9 measure the torque before operation of the wind turbine 101 for calibration. The generation unit 82 generates the pre-operation information (such as shown in Fig. 10) representing the correspondence between the torque of the shaft 33 measured before operation of the wind turbine 101 and the amount of strain in the bolts 5 measured before operation of the wind turbine 101. The storage unit 81 stores the pre-operation information. The generation unit 82 generates the conversion table (such as shown in Fig. 11) representing the correspondence between the current value, the amount of strain, and the torque based on the current value, the amount of strain, the characteristic information, and the pre-operation information.

The correspondence between the current value and the torque is less subject to the change of the drive unit 30 with temperature or over time. Therefore, the generation unit 82 generates a part of the conversion table (such as the columns of the current value "100 A" and "200 A" in Fig. 11) based on the characteristic information representing the correspondence between the current value and the torque, and based on the measured current value and amount of strain. This makes it possible to estimate the torque of the shaft 33 of the yaw actuator 3 within the range of the current value indicated by the characteristic information.

Further, in the calibration performed before operation of the wind turbine 101 (when the yaw actuator 3 is installed), the measured torque reflects the effect of individual variation (variation caused by external factors) and the effect of the rigidity of the mounting portion. Therefore, the generation unit 82 generates the remaining part of the conversion table (such as the columns of the current value "300 A" and "400 A" in Fig. 11) based on the measured current value and amount of strain and the pre-operation information. This makes it possible to estimate the torque of the shaft 33 of the yaw actuator 3 for the range of the current value not covered by the characteristic information.

The foregoing is the description of the embodiments of the present invention with reference to the drawings. Specific configurations are not limited to the above embodiments but include design modifications within the purport of the present invention as disclosed in the appended claims.

### LIST OF REFERENCE NUMBERS

- 1a, 1b: torque estimation system
- 2: control unit
- 3: yaw actuator
- 4: ring gear
- 5: bolt
- 6: strain sensor
- 7: current sensor
- 8: torque estimation device
- 9: torque meter
- 10: load portion
- 30: drive unit
- 31: brake unit
- 32: speed reducer
- 33: shaft
- 34: pinion
- 80: communication unit
- 81: storage unit
- 82: generation unit
- 83: estimation unit
- 84: display unit
- 101: wind turbine
- 102: tower
- 103: nacelle
- 104: rotor
- 105: blade

## Claims

1. A torque estimation device (8) comprising:
a current value obtaining unit (7) configured to obtain a current value of electric current supplied to a drive unit (30) of an actuator (3) included in a wind turbine (101), during operation of the wind turbine (101);
strain sensors (6) for measuring the amount of strain in the bolts (5) fixing the actuator to the nacelle of the wind turbine;
a storage unit (81) storing correspondence information representing correspondence between a torque occurring in a drive shaft (33) of the drive unit (30) during operation of the wind turbine (101), the amount of strain in the bolts (5), and the current value, wherein the storage unit (81) is configured to further store characteristic information of the drive unit (30) in which the torque occurring in the drive shaft (33) and the current value are previously corresponded with each other,
the torque estimation device (8) further comprises
a generation unit (82) configured to generate the correspondence information based on the current value obtained by the current value obtaining unit (7) during operation of the wind turbine (101), the amount of strain in the bolts (5), and the characteristic information, and
an estimation unit (83) configured to estimate the torque occurring in the drive shaft (33) during operation of the wind turbine (101) based on the current value or the amount of strain obtained by the current value obtaining unit (7) and the correspondence information.

2. The torque estimation device (8) of claim 1, wherein the generation unit (82) further updates the correspondence information based on the current value, the torque, and the characteristic information of the drive unit (30).

## Patentansprüche

1. Drehmoment-Schätzvorrichtung (8), mit:
einer Stromwerterfassungseinheit (7), die ausgebildet ist, einen Stromwert eines elektrischen Stroms zu erfassen, der einer Antriebseinheit (30) eines in einer Windkraftanlage (101) enthaltenen Stellglieds (3) während des Betriebs der Windkraftanlage (101) zugeführt wird;
Belastungssensoren (6) zum Messen der Belastung von Bolzen (5), mit denen das Stellglied an der Gondel der Windkraftanlage befestigt ist;
einer Speichereinheit (81), die Korrespondenzinformationen speichert, die die Korrespondenz zwischen einem Drehmoment, das während des Betriebs der Windturbine (101) in einer Antriebswelle (33) der Antriebseinheit (30) auftritt, dem Ausmaß der Belastung der Bolzen (5)1 und dem Stromwert darstellen, wobei
die Speichereinheit (81) ausgebildet ist, zusätzlich charakteristische Informationen der Antriebseinheit (30) zu speichern, in denen das in der Antriebswelle (33) auftretende Drehmoment und der Stromwert zuvor einander zugeordnet wurden,
wobei die Drehmomentschätzvorrichtung (8) außerdem aufweist
eine Erzeugungseinheit (82), die ausgebildet ist, die Korrespondenzinformationen auf der Grundlage des von der Stromwerterfassungseinheit (7) während des Betriebs der Windturbine (101) erfassten Stromwerts, des Ausmaßes der Belastung der Bolzen (5) und den charakteristischen Informationen zu erzeugen, und
eine Schätzeinheit (83), die ausgebildet ist, das während des Betriebs der Windkraftanlage (101) in der Antriebswelle (33) auftretende Drehmoment auf der Grundlage des von der Stromwerterfassungseinheit (7) erhaltenen Stromwerts und der Korrespondenzinformationen zu schätzen.

2. Drehmomentschätzvorrichtung (8) nach Anspruch 1, wobei die Erzeugungseinheit (82) die Korrespondenzinformationen auf der Grundlage des Stromwerts, des Drehmoments und der charakteristischen Informationen der Antriebseinheit (30) weiter aktualisiert.

## Revendications

1. Dispositif d'estimation de couple (8) comprenant:
une unité d'obtention de valeur de courant (7) configurée pour obtenir une valeur de courant électrique fourni à une unité d'entraînement (30) d'un actionneur (3) inclus dans une éolienne (101), pendant le fonctionnement de l'éolienne (101);
des capteurs de contrainte (6) pour mesurer la quantité de contrainte dans les boulons (5) fixant l'actionneur à la nacelle de l'éolienne;
une unité de stockage (81) stockant des informations de correspondance représentant la correspondance entre un couple se produisant dans un arbre d'entraînement (33) de l'unité d'entraînement (30) pendant le fonctionnement de l'éolienne (101), la quantité de contrainte dans les boulons (5) et la valeur de courant,
dans lequel l'unité de stockage (81) est configurée pour stocker en outre des informations caractéristiques de l'unité d'entraînement dans lesquelles le couple apparaissant dans l'arbre d'entraînement (33) et la valeur actuelle sont préalablement mis en correspondance les uns avec les autres,
le dispositif d'estimation de couple (8) comprend en outre
une unité de génération (82) configurée pour générer les informations de correspondance sur la base de la valeur actuelle obtenue par l'unité d'obtention de valeur actuelle (7) pendant le fonctionnement de l'éolienne (101), de la quantité de contrainte dans les boulons (5)
et les informations caractéristiques, et
une unité d'estimation (83) configurée pour estimer le couple apparaissant dans l'arbre d'entraînement (33) pendant le fonctionnement de l'éolienne (101) sur la base de la valeur actuelle ou de la quantité de contrainte obtenue par l'unité d'obtention de la valeur actuelle (7) et des informations de correspondance.

2. Dispositif d'estimation de couple (8) selon la revendication 1, dans lequel l'unité de génération (82), en outre, met à jour les informations de correspondance sur la base de la valeur actuelle, du couple et des informations caractéristiques de l'unité d'entraînement (30).
